# EUROPEAN PATENT SPECIFICATION

(11) **EP 2 515 480 B1**
(45) Date of publication and mention of the grant of the patent: **08.01.2014**
(21) Application number: 12176816.2
(22) Date of filing: 14.08.2007
(51) Int. Cl.: H04L 12/24, H04L 12/28, H04L 29/12

(54) **Method and system for implementing configuration management of devices in network**
Verfahren und System zum implementieren der Konfigurationsverwaltung von Einrichtungen in einem Netzwerk
Procédé et système destinés à mettre en oeuvre la gestion de configuration de dispositifs dans un réseau

(30) Priority: 15.08.2006 CN 200610112148; 15.08.2006 CN 200610112149
(43) Date of publication of application: 24.10.2012
(62) Divisional of application: 07800940.4
(73) Proprietor: Huawei Technologies Co., Ltd., Longgang District, Shenzhen Guangdong 518129 (CN)
(72) Inventor: Wu, Huangwei, Shenzhen Guangdong 518129 (CN)
(74) Representative: Kreuz, Georg Maria

(56) References cited:
- EP-A- 1 667 359
- DSL FORUM: "TR-069 CPE WAN Management Protocol", TECHNICAL REPORT, May 2004 (2004-05), XP040408783, DVB, 17A ANCIENNE ROUTE 1218 GRAND SACONNEX, GENEVA SWITZERLAND

## Description

### Field of the Invention

The present invention relates generally to the technical field of network communication, and in particular, to a method and system for implementing configuration management of devices in a network.

### Background of the Invention

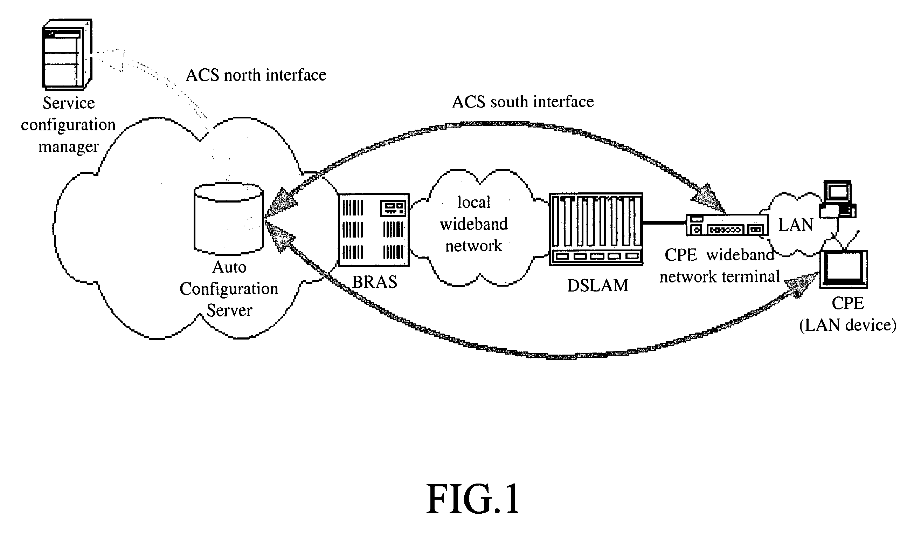

A Digital subscriber line (DSL) has been widely used in a broadband access technology. Fig. 1 illustrates a DSL networking structure, which includes a configuration management server and a Customer Premise Equipment (CPE) working as the wideband network terminal or LAN device, such as a gateway, an IPTV etc.

The networking structure based on DSL technology as shown in Fig. 1 can support the realization of various broadband service applications such as Voice Over IP (VoIP), IP Television (IPTV) etc. A CPE as the IP application terminal is a device based on IP, which is formed for each broadband service application or combination of applications. The Auto Configuration Server (ACS) is responsible for automatically configuring the CPE so as to ensure the normal operation of the CPE without the user configuring the CPE. The ACS can modify and set the CPE parameters with a remote procedure call (RPC).

A current TR-069 standard from a DSL Forum defines a procedure of automatic configuration and management of the ACS with the CPE (such as a gateway), which directly connects to a digital subscriber line access multiplexer (DSLAM) and works as a broadband network terminal. The TR-111 standard defines a procedure of automatic configuration and management of the CPE (e.g. IPTV) and the ACS, through the gateway connected to the CPE which works as the LAN device and is located within the LAN.

In the TR-111 standard, if both the LAN device and the gateway connected thereto are managed by use of the same ACS, then the ACS can not only automatically configure the LAN device but also configure the service of the LAN device on the gateway. In one example, it can set a Quality of Service (QoS) policy for the LAN device service so as to meet the QoS requirement by the LAN device service. In another example, a network address translation (NAT) is set for the LAN device so as to meet the LAN device's requirement on NAT tunneling.

In order to implement the functions of configuring and managing the device and gateway, firstly, it is necessary to implement an association processing of the device with the gateway.

Currently, the detailed association procedure of the device with the gateway according to the TR-111 standard includes the following:
(1) The LAN device (hereafter referred to as the device) transmits an identifier of the device to the gateway through a DHCP option designated by the vendor. When the gateway obtains the identifier of the device, it generates a table including information about identifiers of all the devices on the LAN. The information in the table should conform to the extended gateway data model specification defined in the TR-111, so that the ACS can use corresponding information.
(2) During the DHCP response, the gateway provides the device with an identifier of the corresponding gateway, which also needs to conform to GatewayInfo data object defined in the TR-111, so that the ACS can use corresponding data objects. The device also notifies the ACS of the change in the content of the data object, that is, the device transmits its corresponding gateway ID to the ACS.
(3) To ensure the validity of the information transmitted on the DHCP exchange, the ACS should validate the validity of the gateway identifier provided by the device by verifying the identifier of device provided by the gateway, thereby verifying the validity of the device.

After the above association processing with the device, the corresponding configuration and management operations can be performed on the device and gateway, that is, the device and gateway can be configured based on information obtained after the association.

After the above association processing with the device, the corresponding configuration and management operations can be performed on the device and gateway, that is, the device and gateway can communicate based on information obtained after the association.

During the above procedure of steps (1) to (3), the device ID and gateway ID exchanged through the DHCP protocol must be included in a DHCP Option of V-I Vendor-Specific Information. Elements specified by each vendor in the DHCP option include one or more encapsulated vendor-specific option data fields.

Data of the elements included in the data fields defined by the TR-111 standard are shown in Table 1.

**Table 1**

| Encapsulated Option | Sub-option Code | Source Entity | Description |
|---|---|---|---|
| DeviceManufacturerOUI | 1 | device | Device Manufacturer ID |
| DeviceSerialNumber | 2 | device | Device Serial Number |
| DeviceProductClass | 3 | device | Device Product Class |
| GatewayManufacturerOUI | 4 | gateway | Gateway Manufacturer ID |
| GatewaySerialNumber | 5 | gateway | Gateway Serial Number |
| GatewayProductClass | 6 | gateway | Gateway Product Class |

For a DHCP request from the device including an identifier of the device, a corresponding DHCP option must contain the following vendor-specific option-data fields:
(1) DeviceManufacturerOUI;
(2) DeviceSerialNumber; and
(3) DeviceProductClass, optional.

For a DHCP response from the gateway that contains an identifier of the gateway, the corresponding DHCP option must contain the following vendor-specific option-data fields:
(1) GatewayManufacturerOUI;
(2) GatewaySerialNumber; and
(3) GatewayProductClass, optional.

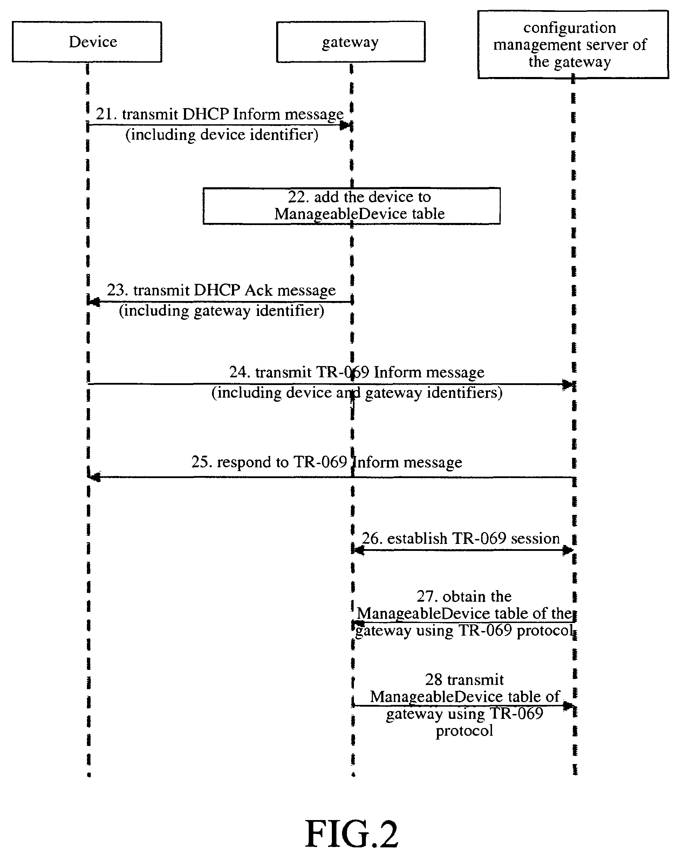

The TR-111 standard specifically provides the processing procedure of establishing association relationship between the LAN device and gateway through messages such as DHCP information (DHCP Inform) and the processing procedure of learning the association relationship between the LAN device and gateway by the configuration management server. The detailed processing procedure is shown in Fig. 2, and includes the following steps:
Step 21: The device informs the DHCP server on the gateway by transmitting a DHCP Inform message which includes the identifier of the device;
Step 22: Upon receiving the DHCP Inform message transmitted from the device, the gateway adds the device to a list of manageable devices (ManageableDevice table), e.g., by recording the identifier of the device;
Step 23: The gateway transmits to the device a DHCP acknowledgement (DHCP Ack) message which includes an identifier of the gateway;
Step 24: The device transmits to the configuration management server a TR-069 Inform message which includes identifiers of the device and gateway;
Step 25: The configuration management server responds to the TR-069 Inform message transmitted from the device;
Step 26: The configuration management server establishes a TR-069 session with the gateway;
Step 27: The configuration management server requests to obtain the ManageableDevice table stored by the gateway by using the TR-069 protocol; and
Step 28: The gateway transmits the stored ManageableDevice table to the configuration management server by using the TR-069 protocol.

In the above processing procedure shown in Fig. 2, the ACS validates whether the identifier that the device provides to the ACS is valid in steps 26, 27 and 28. Such validation operation is used to overcome the disadvantage of lacking a integrity checking mechanism in the DHCP interaction between the device and gateway. For example, with the introduction of the validation operation, the ACS can effectively detect operations which try to tamper the device or gateway information, so that corresponding measures can be taken for the tampering operation.

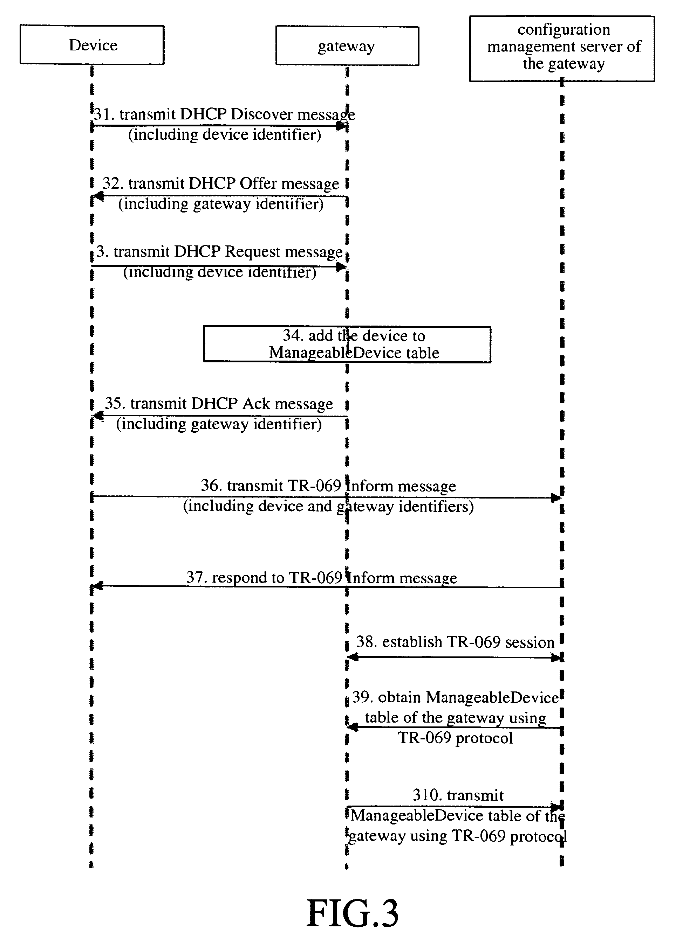

The TR-111 standard also specifically provides the processing procedure of establishing association relationship between the LAN device and gateway through messages such as DHCP Discovery (DHCP Discover) and the processing procedure of learning the association relationship between the LAN device and gateway by the configuration management server. The detailed processing procedure is shown in Fig. 3, which includes the following steps:
Step 31: the device searches for the DHCP server by using the DHCP Discover message which includes an identifier of the device;
Step 32: upon receiving the DHCP Discover message transmitted from the device, as a response of the gateway to the device, an identifier of the corresponding gateway is contained in a DHCP Offer message;
Step 33: the device transmits a request message to the gateway through a DHCP request message, which includes the identifier of the device;
Step 34: upon receiving the DHCP Request message transmitted from the device, the gateway adds the device to a list of manageable devices (ManageableDevice table), e.g., by recording the identifier of the device;
Step 35: the gateway transmits to the device a DHCP Ack message which includes an identifier of the gateway;
Step 36: the device transmits to the configuration management server a TR-069 Inform message which includes identifiers of the device and gateway;
Step 37: the configuration management server responds to the TR-069 Inform message from the device;
Step 38: the configuration management server establishes a TR-069 session with the gateway;
Step 39: the configuration management server makes a request for obtaining the ManageableDevice table stored in the gateway by using the TR-069 protocol; and
Step 310: the gateway transmits the stored ManageableDevice table to the configuration management server by using the TR-069 protocol.

Similarly, in the above processing procedure shown in Fig. 3, the ACS validates whether the identifier information from the device is valid in steps 36, 37 and 38. Such validation is used to overcome the disadvantage of lacking integrity checking mechanism in the DHCP interaction between the device and gateway. With such validation mechanism, the ACS can effectively detect operations trying to tamper the device or gateway information.

It can be understood that the processing procedure shown in Figs. 2 and 3 can effectively ensure the normal association between the gateway and LAN device.

However, in order to implement the above procedure, the LAN device and gateway must belong to the same configuration management server, that is, they are under the control of the same configuration management server. Since there is no solution for detecting whether the LAN device's and gateway's configuration management servers are the same, and the gateway supporting the TR-069/TR-111 standard does not accept management and configuration of other configuration management servers, it is therefore impossible to implement the processing function shown in Figs. 2 and 3 in the case of the LAN device and gateway corresponding to different configuration management servers, when the two configuration management servers are different. That is, in current networks, it is impossible to perform the configuration and management operations for the LAN device and gateway which correspond to different configuration management servers respectively.

Document EP 1667359 A relates to a Remote management method and related devices for use in a home network (HN) comprising a plurality of devices and a routing gateway. The Routing Gateway is coupled to each device of said plurality of devices. The Remote management method comprises the step of an Auto-Configuration Server managing either one of a dedicated device of said plurality of devices and the Routing Gateway or both at request. A further Auto-Configuration Server requesting the Auto-Configuration Server to access and configure the Routing Gateway for providing the further Auto-Configuration Server access to the Routing Gateway and subsequently the Auto-Configuration Server configuring the Routing Gateway to provide the further Auto-Configuration Server access to the Routing Gateway.

### Summary of the Invention

The embodiments of the present invention provide a method and system for realizing configuration management of devices in a network, which can perform configuration management operations on devices corresponding to different configuration management servers respectively.

The embodiments of the present invention are implemented by the following technical solutions.

An embodiment of the present invention provides a method for implementing configuration management of devices in a network, including:
sending, by a second configuration management server corresponding to a second device, the request to an operator supported system OSS;
receiving, by a first configuration management server corresponding to a first device, a request for configuring the first device through an operator supported system, OSS, the first configuration management server corresponding to the first device being different from the second configuration management server corresponding to the second device;
configuring, by the first configuration management server corresponding to the first device, the first device according to the request;
before receiving the request by the first configuration management server, further comprising:
   transmitting, by the second device, to the first device a message carrying information about the configuration management server corresponding to the second device; and
   transmitting, by the first device, to the second device a message carrying information about the configuration management server corresponding to the first device.

It can be understood from the above technical solutions that the present invention provides solutions for configuration management of apparatuses when the configuration management servers corresponding to different apparatuses (a LAN device and a gateway) are not the same. For example, in configuration management operations on the LAN device and gateway, the configuration management server corresponding to the device can not only automatically configure and manage the device, but also configure and manage the device and services of the device on the gateway accordingly.

### Brief Description of the Drawings

Fig. 1 is a schematic diagram of DSL networking structure;
Fig. 2 is a schematic flowchart of a first processing of implementing device configuration and management according to prior art;
Fig. 3 is a schematic flowchart of a second processing of implementing device configuration and management according to prior art;
Fig. 4 is a schematic flowchart of a first processing of implementing device configuration and management according to an embodiment of the present invention;
Fig. 5 is a schematic flowchart of a second processing of implementing device configuration and management according to an embodiment of the present invention;
Fig. 6 is a schematic flowchart of a third processing of implementing device configuration and management according to an embodiment of the present invention;
Fig. 7 is a schematic flowchart of a fourth processing of implementing device configuration and management according to an embodiment of the present invention;,
Fig. 8 is a block diagram of a system according to an embodiment of the present invention that identifies information about configuration management servers;
Fig. 9 is a block diagram of a system according to an embodiment of the present invention that performs configuration management; and
Fig. 10 is a schematic diagram of a network structure applicable for the present invention.

### Embodiments of the Invention

Embodiments of the present invention realize uniform configuration management for different apparatuses in the case that the apparatuses (e.g., a LAN device and a gateway) correspond to different configuration management servers.

For example, in the case that the LAN device and gateway respectively correspond to different configuration management servers, the embodiments of the present invention can perform corresponding configuration management on the gateway for the LAN device and service of the LAN device.

That is, in the case that configuration management servers corresponding to the device and gateway are different, the embodiments of the present invention provides a solution that allows the gateway to be configured by the corresponding configuration management server, so that it can accept management and access of the configuration management server corresponding to the device; after such configuration, the configuration management server corresponding to the device can not only automatically configure and manage the device, but also perform the corresponding configuration and management for the device and its service on the gateway. Or, in the embodiments of the present invention, after the configuration management server corresponding to the device obtains information about the configuration management server corresponding to the gateway, it can trigger the configuration management server corresponding to the gateway to manage and configure the gateway when necessary.

Certainly, the two apparatuses that realize the configuration management in the embodiments of the present invention may be two LAN devices besides a gateway and a LAN device, such as an IPTV and a Network Attached Storage (NAS). The personal video record (PVR) function of the IPTV may store the generated data on the NAS of the same home network. Possibly, the ACS of the NAS configures not only the parameters of the NAS, but also the NAS related parameters that are used for configuring the PVR on the IPTV

In order to realize the above configuration management, it is necessary to allow the two apparatuses to identify whether their corresponding configuration management servers are the same during the association procedure.

According to an embodiment of the present invention, a method for identifying information about the configuration management server during the association procedure may include a step of carrying the information about the configuration management server in the messages interacted during the association procedure of devices. Specifically, the method may extend the DHCP option so that information about the corresponding configuration management server is included in the messages interacted during the association procedure of devices. Alternatively, the method may also extend other protocol messages, for carrying and transmitting of the information about the corresponding configuration management server; or it may also carry and transmit the information about the corresponding configuration management server by using specific protocol messages, so that the network can support the exchange of the information about the configuration management servers.

For example, the format of the V-I Vendor-Specific Information DHCP Option of the DHCP protocol can be extended to support the information about the configuration management server. Thus, when the device associates with the gateway, they can find that their corresponding configuration management servers are different through DHCP interacted messages between the device and gateway.

The following embodiment illustrates an implementation of the extending the DHCP option.

The data fields of the extended DHCP option (i.e., V-I Vendor-Specific Information DHCP Option) contain information as shown in Table. 2, in which the data fields added corresponding to Table 1 are used to describe information about the configuration management servers corresponding to the device and gateway as well as the their services.

**Table 2**

| **Encapsulated Options** | **Sub-option code** | **Source Device** | **Description** |
|---|---|---|---|
| DeviceManufacturerOUI | 1 | Device | Device Manufacturer ID |
| DeviceSerialNumber | 2 | Device | Device Serial Number |
| DeviceProductClass | 3 | Device | Device Product Class |
| GatewayManufacturerOUI | 4 | Gateway | Gateway Manufacturer ID |
| GatewaySerialNumber | 5 | Gateway | Gateway Serial Number |
| GatewayProductClass | 6 | Gateway | Gateway Product Class |
| **DeviceManagementServerURL** | **7** | **Device** | **URL of configuration Management Server of device** |
| **DeviceConnectionRequestURL** | **8** | **Device** | **Device Connection Request URL** |
| **DeviceServiceClass** | **9** | **Device** | **Device Service Class** |
| **GatewayManagementServerU RL** | **10** | **Gateway** | **URL of configuration Management Server of Gateway** |
| **GatewayConnectionRequestURL** | **11** | **Gateway** | **Gateway Connection Request URL** |
| **GatewayServiceClass** | **12** | **Gateway** | **Gateway Service Class** |

According to Table 2, for a DHCP request from the device including the identifier of the device, the DHCP option must include the following encapsulated vendor-specific option-data fields:
DeviceManufacturerOUI;
DeviceSerialNumber;
DeviceProductClass, optional;
DeviceManagementServerURL;
DeviceConnectionRequestURL, optional; and
DeviceServiceClass, optional.

According to Table 2, for a DHCP response from the gateway including an identifier of the gateway, the DHCP option must include the following encapsulated vendor-specific option-data fields:
GatewayManufacturerOUI;
GatewaySerialNumber;
GatewayProductClass, optional;
GatewayManagementS erverURL;
GatewayConnectionRequestURL, optional; and
GatewayServiceClass, optional.

In embodiments of the present invention, the extendible DHCP options include the DHCP option with an option code of 125, Vendor Class Identifier with an option code of 60, Client Identifier with an option code of 71, User Class with an option code of 77, V-I Vendor Class with an option code of 124 and so on. Specific extending methods are similar to extended contents in Table 2, that is, extending one or more encapsulated vendor-specific option-data fields contained in a vendor-specific element in the DHCP options. By referring to the Table 2, the specific extending methods are clear and comprehensible, and will not be elaborated here.

In the following, several embodiments of the configuration management according to the present invention will be described in detail with reference to the accompanying drawings.

### First Embodiment

When associating the device with the gateway, their corresponding configuration management servers are found to be not consistent according to the above scheme. When this information is obtained by the configuration management server of the gateway, the configuration management server can configure the gateway according to a predefined strategy, so that, according to the configuration, the gateway accepts in a certain range the configuration management from the configuration management server of the device, such as query and management.

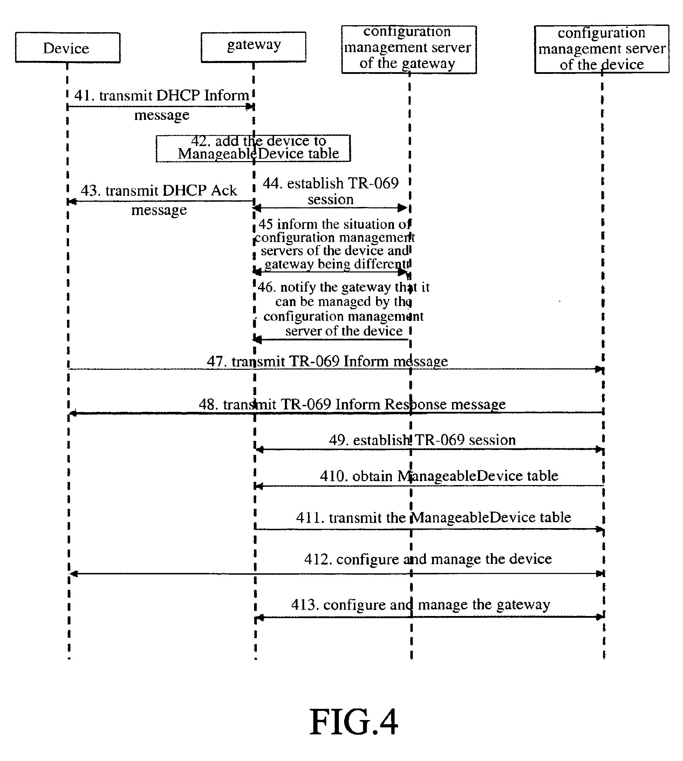

The detailed flowchart of the First Embodiment is show in Fig. 4, and comprises the following steps:
Step 41: The device transmits a DHCP information (DHCP Inform) message;

The DHCP Inform message contains the identifier of the device and related information about the configuration management server of the device. The related information includes a URL of the configuration management server. The DHCP Inform message may further include information about the device class, device service class and so on.

In a specific implementation, in addition to the DHCP Inform message, DHCP Discover and DHCP Request can also be used to carry and transmit the above information.

Step 42: The gateway adds the device to a list of manageable devices (ManageableDevice table);

That is, the gateway extracts information about the related device from the received DHCP message and adds the device to the ManageableDevice table according to the extracted information. The information about the related device includes the identifier of the device and information about the configuration management server of the device (including a URL of the configuration management server) as well as information about the device class and the device service class.

Step 43: The gateway transmits a DHCP Ack message to the device;

The DHCP Ack message contains an identifier of the gateway, a Connection Request URL of the gateway through which the gateway is managed by the ACS, and information about the configuration management server of the gateway which includes a URL of the configuration management server.

In a specific implementation, in addition to the DHCP Ack message, a DHCP Offer message can also be used to carry and transmit the above information.

Step 44: The gateway establishes a TR-069 session with the configuration management server of the gateway;

In order to establish the session, the gateway may actively report the message to a high level; or the configuration management server actively requires establishing a session with the gateway.

Step 45: The gateway informs its configuration management server that the configuration management servers of the gateway and the device are not the same;

Specifically, this step may be implemented by any of the following schemes:
(1) The gateway actively notifies any change in a list of manageable devices (a ManageableDevice table) to the configuration management server of the gateway, when the ManageableDevice table changes. When the configuration management server of the gateway receives the notification, it inquires information about related devices which is stored on the gateway. The information includes a URL of the configuration management server of the device, and may further include a class and a service class of the device and so on;
(2) The gateway notifies its configuration management server by using a TR-069 Inform message, which carries information about the configuration management server of the device. The information includes a URL of the configuration management server of the device, and may further include a device class, a service class of the device and so on.
(3) The gateway notifies its configuration management server by using a newly-added RPC command, which carries information about the configuration management server of the device. The information includes a URL of the configuration management server of the device, and may further include a device class, a service class of the device, and so on.

Step 46: The configuration management server of the gateway configures the gateway so that it can accept the management of the configuration management server of the device;

Specifically, the configuration management server of the gateway receives information about the device, determines whether the gateway accepts the management of the configuration management server of the device, and determines a corresponding authority and range of the management in the case that the gateway accepts the management, according to the received information and a certain strategy. Then the configuration management server of the gateway configures information about whether the gateway will accept the management of the configuration management server of the device, the corresponding authority and range of the management in case that the gateway accepts the management. A detailed configuration scheme may be a configuration implementation defined in the current TR-069/TR-111 standards.

The configured management range which is performed by the configuration management server of the device on the gateway may include an access to the ManageableDevice table of the gateway. Moreover, if the configuration management server of the gateway determines that the gateway should not accept the management of the configuration management server of the device, it can notify the gateway to delete the device from the ManageableDevice Table of the gateway and the procedure terminates here.

Step 47: The device transmits a TR-069 Inform message to the configuration management server of the device;

The TR-069 Inform message contains an identifier of the device and related information about the gateway which is obtained at step 43. The related information about the gateway includes a Connection Request URL of the gateway, through which the gateway is managed by the ACS; the related information also includes information about the configuration management server of the gateway, such as a URL of configuration management server of the gateway.

Specifically, the above information can be carried by extending the TR-069 message.

Step 48: The configuration management server of the device transmits a response message to the device;

Step 49: The configuration management server of the device establishes a TR-069 session with the gateway;

Step 410: The configuration management server of the device requests the ManageableDevice table from the gateway;

Specifically, the configuration management server of the device requests the ManageableDevice table from the gateway according to the obtained gateway information.

Step 411: The gateway returns the ManageableDevice table to the configuration management server of the device;

Specifically, the gateway determines whether to respond to step 49 according to the configuration of its configuration management server. If the gateway is configured to allow the configuration management server of the device to access the ManageableDevice Table of the gateway, then the gateway returns the ManageableDevice Table to the configuration management server of the device. If it is verified that a validity of the device fails, according to the obtained information, the procedure terminates.

Step 412: The configuration management server of the device configures and manages the device;

Step 413: The configuration management server of the device configures and manages the gateway.

Specifically, the configuration management server of the device makes configuration about the device and device service on the gateway using TR-069/TR-111 technologies.

In the procedure shown in Fig. 4, on the gateway, it is necessary to extend a gateway data model supporting the TR-111 standard, and to add descriptions of information about the configuration management server of the device associated with the gateway, an access authority, access information of the device, service information of the device, the detail of which is shown in Table 3.

**Table 3**

| **Name** | **Type** | Writable or not | **Description** | **Default** |
|---|---|---|---|---|
| InternetGatewayDevice.-ManagementServer. | Object | - | The object includes the parameters of the associated CPE device | - |
| ··· | ··· | ··· | ··· | |
| ManageableDevice-NumberOfEntries | Unsigned Integer | - | Number Of Entries in the ManageableDevice table | - |
| ManageableDevice-NotificationLimit | Unsigned Integer | Yes | When ManageableDevice-NumberOfEntries changes, the latest time for transmitting active notification message (if the active notification function is enabled), in second | - |
| InternetGatewayDevice.-ManagementServer.-ManageableDevice. {i}. | Object | - | Each entity corresponds to a LAN device associated with a gateway | - |
| ManufacturerOUI | A string of 6 characters | - | Device Manufacturer ID | - |
| SerialNumber | A string of 64 characters | - | Device Serial Number | - |
| ProductClass | A string of 64 characters | - | Device Product Class | - |
| ServiceClassNumber OfEntries | Unsigned Integer | | Number of Service Classes | |
| **InternetGatewayDevice.-ManagementServer.-ManageableDevice.{i}.-ServiceClass.{i}.** | **Object** | - | **Related information about Device Service Class** | - |
| **ServiceClass** | **A string of 64 characters** | | **Device Service Class** | |
| **InternetGatewayDevice.-ManagementServer.-ManageableDevice.{i}.-MangementServer** | **Object** | - | **Related information about Configuration Management Server of Device** | - |
| **ServerURL** | **A string of 256 characters** | - | **URL of Configuration Management Server of Device** | - |
| **AccessControl** | **A string of 64 characters** | - | **Access Authority to device of Configuration Management Server of Device, which may be "ADMINISTRATOR", "GUEST"** | - |
| **ConnectionRequestURL** | **A string of 256 characters** | - | **ConnectionRequestURL of Device, through which the device receives the connection request from the configuration management server** | |

Meanwhile, the gateway must not only support management of its own configuration management server, but also accept configuration management from the configuration management servers of other devices according to the authority set by its own configuration management server.

In embodiments of the present invention, according to the TR-111 standard, the data model of the device must have parameters for describing the related information of the associated device, including the Manufacture information, serial number and product class:
Device.GatewayInfo.ManufacturerOUI;
Device.GatewayInfo. SerialNumber;
Device.GatewayInfo.ProductClass;
Moreover, the following parameters are added:
Device.GatewayInfo.ManagementServerURL;
Device.GatewayInfo.ConntectionRequestURL;
Device.GatewayInfo.ServiceClass,

These parameters are used for describing a URL of the configuration management server of the gateway associated with the device, a connection request URL and a service class of the gateway, respectively.

### Second Embodiment

In this embodiment, when the device is associated with the gateway, they can find that their configuration management servers are not the same according to the above scheme. The configuration management server of the device actively requests configuration from the configuration management server of the gateway, so that the configuration management server of the device can access and manage the gateway. After the configuration management server of the gateway receives the request, it configures the gateway according to a predefined strategy so that the gateway accepts in a certain range the query and management from the configuration management server of the device, and the gateway accepts query and management in a certain range from the configuration management server of the device, according to the configuration.

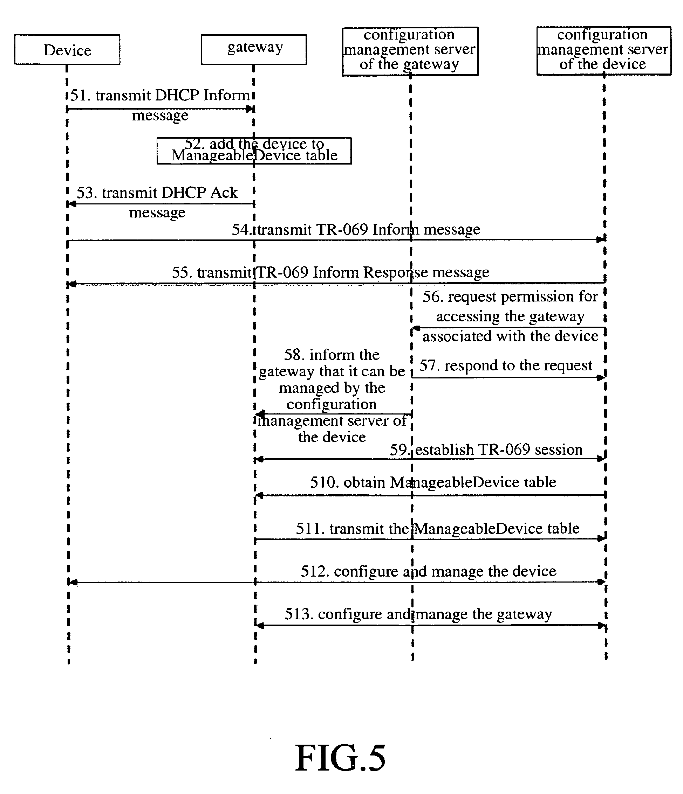

The detailed flowchart of the Second Embodiment is show in Fig. 5, and the procedure comprises the following steps:
Step 51: The device transmits a DHCP Inform message;.

The DHCP Inform message transmitted from the device may include the identifier of the device and related information about the configuration management server of the device. The related information about the configuration management server of the device includes a URL of the configuration management server of the device. The DHCP Inform message may also include information about the device class, service class of the device and so on.

In a detailed implementation, in addition to the DHCP Inform message, other messages, such as DHCP Discover and DHCP Request message, may also include the above information, for transmission of the above information.

Step 52: The gateway adds to the ManageableDevice table the device that transmits the DHCP message;.

Specifically, according to the received DHCP message, the gateway extracts information about the device from the DHCP message and adds the device to the ManageableDevice table by using the obtained information.

Corresponding to step 51, the information about the device includes an identifier of the device and information about the configuration management server of the device. The information about the configuration management server of the device includes a URL of the configuration management server. The DHCP message may also include information about a device class, a service class of the device and so on.

Step 53: The gateway transmits a DHCP Ack message to the device;

The transmitted DHCP Ack message may contain an identifier of the gateway, a Connection Request URL of the gateway through which the gateway is managed by the ACS, and information about the configuration management server of the gateway, such as a URL of the configuration management server.

In a detailed implementation, in addition to the DHCP Ack message, a DHCP Offer message may include the above information, for transmission of the above information.

Step 54: The device transmits a TR-069 Inform message to the configuration management server of the device;

The TR-069 Inform message contains an identifier of the device and the information about the gateway obtained at step 53. The information about the gateway includes an identifier of the gateway, a Connection Request URL through which the gateway is managed by the ACS, and information about the configuration management server of the gateway, such as a URL of the configuration management server of the gateway.

Furthermore, the above information may be carried by extending the TR-069 Inform message.

Step 55: The configuration management server of the device transmits a response message to the device;

The configuration management server of the device transmits a response message to the device upon receiving the TR-069 Inform message;

Step 56: The configuration management server of the device requests the configuration management server of the gateway to grant it with the permission for accessing the gateway;

Specifically, information can be transmitted between the configuration management server of the device and that of the gateway through a customized communication protocol or an operator supported system (OSS). The transmitted permission request message must include an identifier of the device, information about the gateway associated with the device and an identifier of the gateway. It may further include a range and an authority for accessing and managing a data model on the gateway which is requested for being granted. That is, the permission request message that is constructed may include an identifier of the device, an identifier of the gateway, and information about a reading/writing permission of the gateway. The information about writing permission defines a configuration and management authority for the corresponding gateway.

Step 57: The configuration management server of the gateway responds to the permission request transmitted from the configuration management server of the device;

That is, upon receiving the permission request, the configuration management server of the gateway decides whether to accept the permission request according to a predefined strategy, and responds to the permission request from the configuration management server of the device according to the decision. The content of the responded message essentially comprises whether the permission request is accepted. It further includes a range and an authority for accessing and managing the data model on the gateway which is granted. That is, the permission response message that is constructed includes: the permission granted and the reading/writing permission of the gateway.

In this step, the ACS of the gateway can also obtain information from the gateway for which permission is requested, such as the ManageableDevice table of the gateway, so that the validity of the device can be further verified.

In this step, if the permission request from the configuration management server of the device is declined by the configuration management server of the gateway, then the flow terminates.

Step 58: the configuration management server of the gateway configures the gateway as being able to be managed by the configuration management server of the device;

Specifically, the gateway's configuration management server determines whether the gateway accepts a management of the configuration management server of the device, as well as an authority and a range of the management, according to the related information about the device received at step 56 and a certain strategy. Then the configuration management server of the gateway makes configuration on the gateway about whether the gateway accepts a management of the configuration management server of the device, and an authority and a range of the management. A detailed configuration scheme can be a configuration implementation defined by the current TR-069/TR-11 standards, though other configuration scheme can also be used as only as the configuration purpose is met.

Where, the management range by the configuration management server of the device on the gateway that is configured can include access to the ManageableDevice table.

Moreover, if the configuration management server of the gateway thinks that the gateway should not be managed by the configuration management server of the device, it can notify the gateway to delete the device from the ManageableDevice Table of the gateway and the flow terminates here.

Step 58 can be executed before step 57.

Step 59: The configuration management server of the device establishes a TR-069 session with the gateway;

Step 510: The configuration management server of the device requests the ManageableDevice table from the gateway;

That is, the configuration management server of the device requests the ManageableDevice table from the gateway according to the obtained gateway information. Specifically, technology for making the request for the ManageableDevice table can be but is limited to the existing TR-069/TR-111.

Step 511: The gateway returns the ManageableDevice table to the configuration management server of the device;

The gateway determines whether to respond to step 59 according to the configuration of its configuration management server. If the gateway is configured as allowing the configuration management server of the device to access the gateway's ManageableDevice Table, then the gateway returns the ManageableDevice Table to the configuration management server of the device.

Step 512: The configuration management server of the device configures and manages the device;

Step 513: The configuration management server of the device configures and manages the gateway.

Specifically, technology for making configuration about the device and device service on the gateway can be but is not limited to TR-069/TR-111.

### Third Embodiment

In this embodiment, when the device is associated with the gateway, they can find that their configuration management servers are not the same according to the schemes of the above embodiments. Then, the device requests the configuration management server of the gateway to grant permission to the configuration management server of the device, so that the configuration management server of the device can access and manage the gateway. When the configuration management server of the gateway receives the request, it configures the gateway according to a predefined strategy so that the gateway accepts, in a certain range, an query and a management from the configuration management server of the device, and the gateway accepts, in a certain range, an query and a management from the configuration management server of the device according to the configuration.

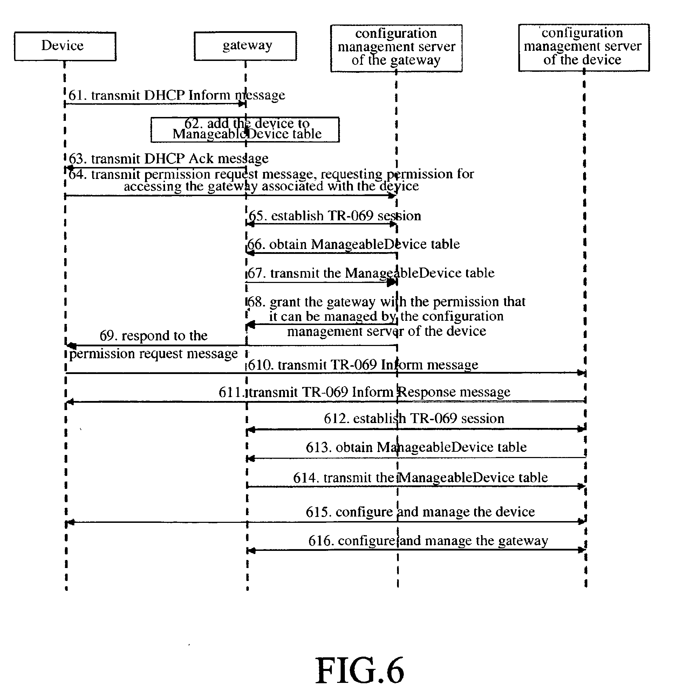

The detailed implementation flow of Third Embodiment is show in Fig. 6, and comprises the following steps:
Step 61: the device transmits a DHCP Inform message to the gateway;

The DHCP Inform message contains an identifier of the device and related information about the configuration management server of the device, such as a URL of the configuration management server. The message may further include information about the device class, device service class and the like.

In a detailed implementation, in addition to the DHCP Inform message, DHCP Discover and DHCP Request may also contain the above information, for transmission of the information.

Step 62: The gateway adds the device to its ManageableDevice table;.

Specifically, upon receiving the DHCP message, the gateway extracts information about the device from the message and adds the device to the ManageableDevice table by use of the obtained information. The information about the device includes an identifier of the device, information about the configuration management server of the device and a URL of the configuration management server. The information may further include information about a class and a service class of the device, and so on.

Step 63: The gateway transmits a DHCP Ack message to the device;.

The DHCP Ack message contains an identifier of the gateway, a Connection Request URL of the gateway through which the gateway accepts a management of the ACS, and information about the configuration management server of the gateway, such as a URL of the configuration management server.

In a detailed implementation, in addition to the DHCP Ack message, a DHCP Offer message may also be used to carry and transmit the above information.

Step 64: The device transmits a permission requests message to the configuration management server of the gateway;

The permission request message transmitted from the device includes an identifier of the device, information about the configuration management server of the device and a URL of the ACS of the device as well as the related information about the gateway which is obtained at step 63, such as an identifier of the gateway. It may further include the range and authority for which the permission is requested. The permission request message that is constructed may include: an identifier of the device, a URL of the configuration management server of the device, an identifier of the gateway, and information about the reading/writing authority of the gateway.

The permission request message may be implemented by extending a TR-069 Inform message in the manner that the device transmits the TR-069 Inform message to the configuration management server of the gateway.

Step 65: The configuration management server of the gateway establishes a TR-069 session with the gateway;

Step 66: The configuration management server of the gateway requests the ManageableDevice table from the gateway;

The configuration management server of the gateway requests the ManageableDevice table from the gateway, according to the obtained information about the gateway. Specifically, the ManageableDevice table may be obtained by use of existing TR-069/TR-111 technologies.

Step 67: The gateway returns the ManageableDevice table to the configuration management server of the gateway;

Step 68: The configuration management server of the gateway configures the gateway so that the gateway can be accessed and managed by the configuration management server of the device;.

The configuration management server of the gateway determines whether the gateway accepts a management of the configuration management server of the device as well as an authority and a range of the management, according to the received related information and a certain strategy. Then the configuration management server of the gateway configures the gateway to set whether the gateway accepts a management of the configuration management server of the device, and an authority and a range of the management.

The configured range of the management that is performed by the configuration management server of the device on the gateway may include an access to the ManageableDevice table of the gateway.

If the configuration management server of the gateway determines that the gateway should not be managed by the configuration management server of the device, it can notify the gateway to delete the device from the ManageableDevice Table of the gateway, and the flow terminates.

Step 69: The configuration management server of the gateway responds to the permission request message from the device;

The message for the responding comprises the content about whether the permission request is accepted; and may further include a range and an authority for accessing and managing the data model on the gateway which is granted.

In a detailed implementation, a permission response message that may be constructed includes information about the request permission being granted and the reading/writing authority of the gateway.

The permission response message may be implemented by extending a TR-069 Inform response message in the manner that the configuration management server of the gateway transmits the TR-069 Inform response message to the device.

If the permission request from the device is declined, then the flow terminates.

It is noted that steps 69 and 68 may be executed in any order.

Step 610: The device transmits a TR-069 Inform message to the configuration management server of the device;

The TR-069 Inform message includes an identifier of the device and the related information about the gateway obtained at step 63. The related information about the gateway includes an identifier of the gateway and a Connection Request URL through which the gateway is managed by the ACS. The message may further include a range and an authority for accessing and managing the data model on the gateway to which permission for accessing and managing is granted.

Specifically, it may be implemented by extending the TR-069 Inform message;

Step 611: The configuration management server of the device transmits a response message to the device;

Step 612: The configuration management server of the device establishes a TR-069 session with the gateway;

Step 613: The configuration management server of the device request the ManageableDevice table from the gateway;

Specifically, the configuration management server of the device requests the ManageableDevice table of the gateway from the gateway according to obtained information about the gateway.

Step 614: the gateway returns the ManageableDevice table to the configuration management server of the device;

The gateway determines whether to respond to step 69 according to the configuration of its configuration management server. If the gateway is configured to allow the configuration management server of the device to access the ManageableDevice table of the gateway, then the gateway returns the ManageableDevice table to the configuration management server of the device.

If the gateway determines that the configuration management server of the device is not allowed to access the ManageableDevice Table of the gateway, it declines the request of step 613, and the flow terminates.

Step 615: The configuration management server of the device configures and manages the device;

Step 616: The configuration management server of the device configures and manages the gateway.

Specifically, the configuration management server of the device correspondingly configures the device and services of the device on the gateway by using TR-069/TR-111 technologies.

### Fourth Embodiment

In this embodiment, when the device is associated with the gateway, they can find that their configuration management servers are not the same, according to solutions provided by the embodiments of the present invention. Then, the configuration management server of the device transmits to the configuration management server of the gateway the related parameter information which is to be configured on the gateway for the device and the services of the device, and requests the configuration management server of the gateway to make configuration on the gateway. Upon receiving the request, the configuration management server of the gateway determines whether to make corresponding configuration of these parameters on the gateway, according to a predefined strategy.

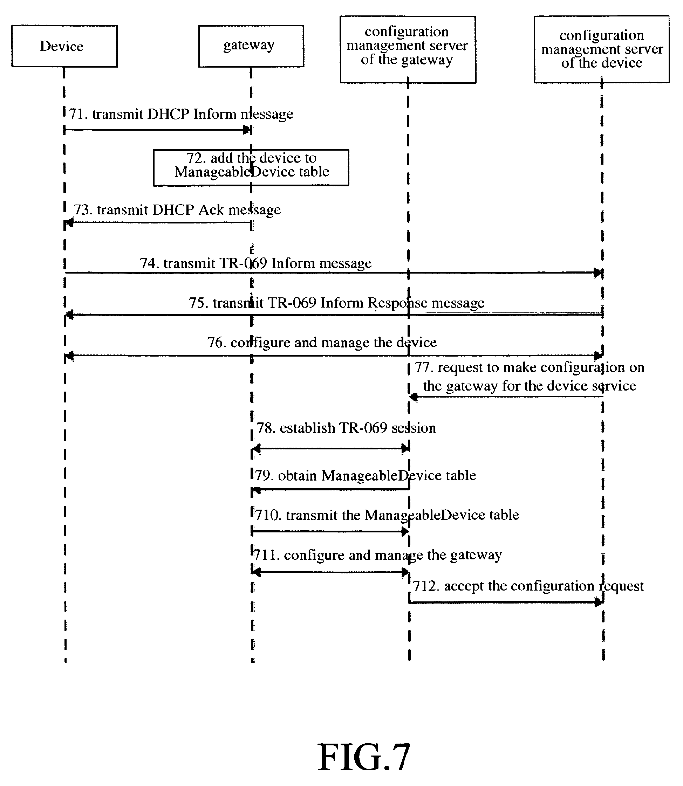

The detailed implementation flow of Fourth Embodiment is show in Fig. 7, and comprises the following steps:
Step 71: The device transmits a DHCP Inform message to the gateway;

The DHCP Inform message includes an identifier of the device and related information about the configuration management server of the device and a URL of the configuration management server, and may further include information about a class and a service class of the device and so on.

In a detailed implementation, in addition to the DHCP Inform message, DHCP Discover and DHCP Request messages and the like may also be used to carry and transmit the above information.

Step 72: The gateway adds the device to the ManageableDevice table;

Specifically, the gateway extracts information about the device from the DHCP message according to the received DHCP message, and adds the device to the ManageableDevice table by use of the obtained information. The information about the device includes an identifier of the device and the related information about the configuration management server of the device and a URL of the configuration management server. The DHCP message may further include information about a class and a service class of the device.

Step 73: The gateway transmits a DHCP Ack message to the device;

The DHCP Ack message contains an identifier of the gateway, a Connection Request URL of the gateway through which the gateway accepts a management of the ACS, and information about the configuration management server of the gateway, such as a URL of the configuration management server.

In a detailed implementation, in addition to the DHCP Ack message, a DHCP Offer message may also be used to carry and transmit the above information.

Step 74: The device transmits a TR-069 Inform message to the configuration management server of the device;

The TR-069 Inform message includes an identifier of the device and the related information about the gateway which is obtained at step 73. The related information about the gateway includes an identifier of the gateway and a Connection Request URL through which the gateway accepts a management of the ACS. The TR-069 Inform message further includes information about the configuration management server of the gateway, which includes a URL of the configuration management server of the gateway. Specifically, the above information may be carried by extending the TR-069 Inform message.

Step 75: The configuration management server of the device transmits a response message to the device;

Step 76: The configuration management server of the device configures and manages the device;

Step 77: The configuration management server of the device requests the configuration management server of the gateway to make corresponding configurations for the device and device service on the gateway;

Specifically, by a customized communication protocol or OSS system, information can be transmitted between the configuration management server of the device and that of the gateway. The transmitted request must include an identifier of the device and related information about the gateway associated with the device. The related information includes an identifier of the gateway, parameters and values of a data model on the gateway which is requested for being configured.

In a detailed implementation, a request configuration message constructed at the configuration management server of the device includes: an identifier of the device and an identifier of the gateway, and Internet-Gateway-Device. WAN-Device. 1. WAN-Connection-Device. 1. WAN-IP-Connection. 1. NAT-Enabled = TRUE, where, the part before the equal sign is a parameter in the data model of the gateway, and the part after the equal sign is a value requested to configure.

Step 78: The configuration management server of the gateway establishes a TR-069 session with the gateway;

Step 79: The configuration management server of the gateway requests the ManageableDevice table from the gateway;

Specifically, the configuration management server of the gateway requests the ManageableDevice table from the gateway, according to the obtained information about the gateway.

Step 710: The gateway returns the ManageableDevice table to the configuration management server of the gateway;

Step 711: The configuration management server of the gateway configures and manages the gateway;

Specifically, the configuration management server of the gateway determines whether to accept the request from the configuration management server of the device and make the corresponding configuration on the gateway, according to the obtained information and a predefined strategy. If the configuration management server of the gateway decides to accept the request from the configuration management server of the device, it makes the corresponding configuration on the gateway according to the request information transmitted by the configuration management server of the device.

Step 712: The configuration management server of the gateway returns a configuration request response message to the configuration management server of the device.

If the configuration management server of the gateway accepts the request from the configuration management server of the device, a "request being accepted" message is provided as its response; and if the request from the configuration management server of the device is declined, a "request being declined" message is provided as its response.

An embodiment of the present invention also provides a system for configuration management of devices in the network. The system includes a first device and a second device that need to associate and communicate. The first and second devices correspond to different configuration management servers respectively, and the first device may be a device that can support configuration management from a plurality of configuration management servers.

As an example, an embodiment of the present invention may be applied to a DSL system, the first device is a gateway and the second device is a LAN device. Naturally, both the first and second device may be LAN devices, such as IPTV and NAS. A PVR function of the IPTV may store the generated data on the NAS of the same home network. Under likely conditions, the ACS of the NAS can configure not only the parameters of the NAS but also configure related parameters of the NAS on the IPTV, which are used for the PVR.

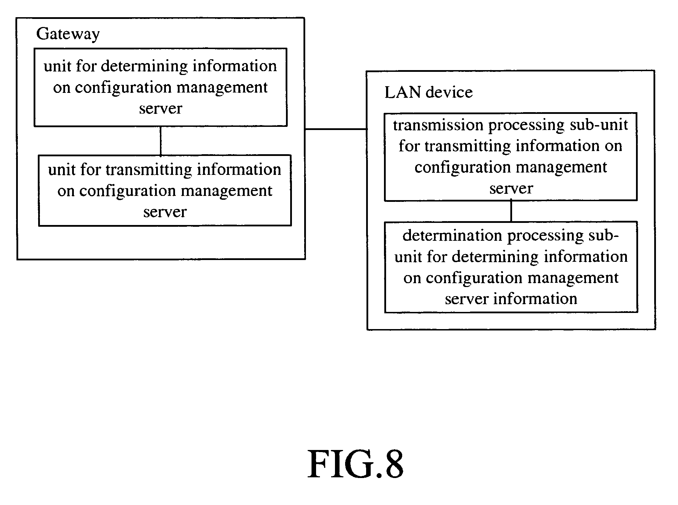

In an embodiment of the present invention, in order to allow two devices associated with each other to identify whether their configuration management servers are the same, a system is configured to include an interaction unit for interacting information about the configuration management servers, which is arranged in a first device and a second device associated with each other and is adapted to determine and transmit information about a configuration management server of the first device, and for receiving information about a configuration management server corresponding to the second device which is transmitted from the second device. The interaction unit further includes the following sub-units, the detailed structure of which is shown in Fig. 8:
a determination processing sub-unit for determining the information about the configuration management servers, which is arranged in the two devices to be associated and is adapted to determine the information about the configuration management servers corresponding to the first and second devices, respectively; and
a transmission processing sub-unit for transmitting information about the configuration management servers, which is arranged in at least one of the two devices to be associated, and is adapted to transmit the determined information about the configuration management server corresponding to the device.

Moreover, the transmission processing sub-unit may be a DHCP Notification message transmission sub-unit, a DHCP Confirmation message transmission sub-unit, a DHCP Discover message transmission sub-unit, a DHCP Offer message transmission sub-unit or a DHCP Request message transmission sub-unit, which have a function for transmitting information about the configuration management server. That is, the transmission processing sub-unit may transmit the information about the configuration management servers through any one of the above messages. Or, the above messages may be used, at the same time, to deliver the information about the configuration management servers.

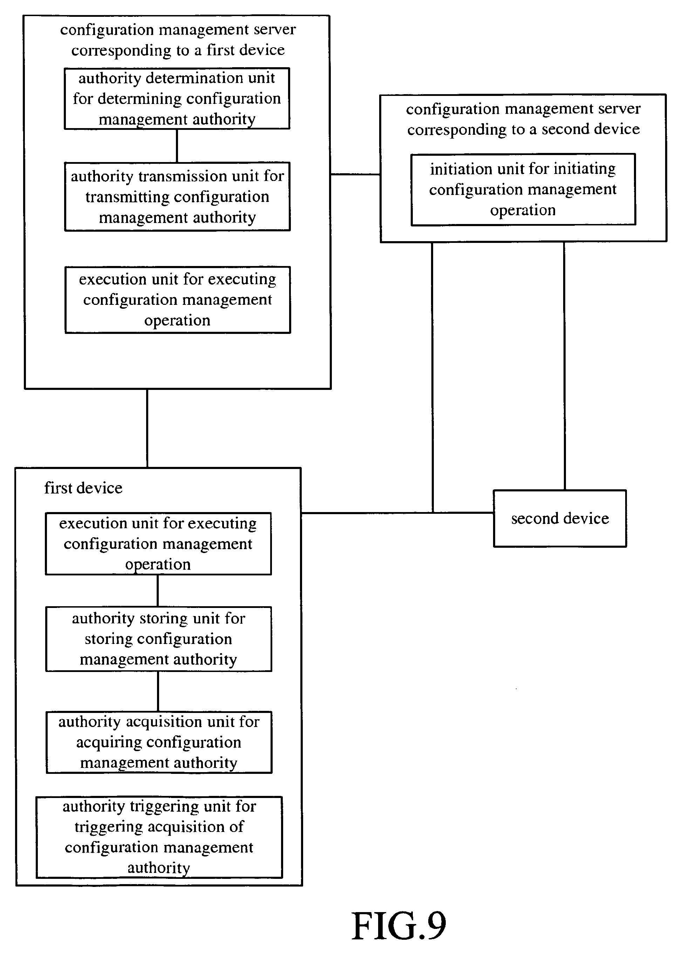

The system for implementing the configuration management according to the embodiment is shown in Fig. 9, and mainly includes an authority determination unit adapted to determine a configuration management authority, and an operation initiation unit adapted to initiate a configuration management operation, and optionally an authority transmission unit adapted to transmit the configuration management authority.

The authority determination unit is arranged in the configuration management server corresponding to the first device and is adapted to determine the configuration management authority on the first device of the configuration management server corresponding to the second device.

The authority transmission unit is arranged in the configuration management server corresponding to the first device and is adapted to transmit the configuration management authority determined by the authority determination unit to the first device, according to triggering of received information transmitted from the first device, the second device or the configuration management server corresponding to the second device.

The operation initiation unit is arranged in the configuration management server corresponding to the second device and is adapted to determine whether the configuration management operation for the second device is necessary in the first device, and trigger an operation execution unit for executing the configuration management operation.

The operation initiation unit initiates the configuration management operation on the first device, directly or through the configuration management server corresponding to the first device.

The operation execution unit is arranged in the configuration management server corresponding to the first or second device and adapted to control the configuration management server corresponding to the second device to perform the configuration management operation on the first device, according to the corresponding configuration management authority.

In the system of the embodiment, the first device may be a device that supports configuration managements of a plurality of configuration management servers. The device is also shown in Fig. 9 and comprises:
an authority storing unit for storing a configuration management authority, which is configured for storing the configuration management authority on this device of configuration management servers corresponding to other devices; and
an operation execution unit adapted to perform a configuration management operation on the device, according to information about the configuration management operation transmitted from the configuration management servers corresponding to the other devices and the configuration management authority stored in the authority storing unit.

The device supporting configuration managements from the configuration management servers may further include:
an authority acquisition unit, adapted to receive, from the configuration management server corresponding to the device, information about a configuration management authority on the device of configuration management servers corresponding to other devices, and to provide the information to the authority storing unit; and
an authority triggering unit, adapted to transmit, to the configuration management server corresponding to the device, information about the configuration management servers corresponding to the other devices whose configuration management authority need to be acquired by the device, and to trigger the authority transmission unit in the configuration management server corresponding to the device to transmit the corresponding configuration management authority to the device.

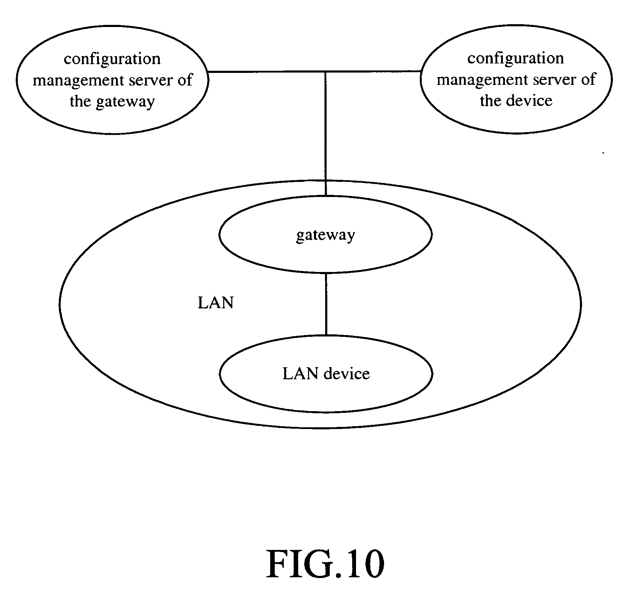

An embodiment of the present invention is suitable for a system as shown in Fig. 10, which includes a first device, a first configuration management server corresponding to the first device, a second device, and a second configuration management server corresponding to the second device. As an example, in the DSL system, a gateway is the first device, a LAN device is the second device as an example, and functions of the devices of the system include:
(1) The gateway provides Internet access for devices in a home network, supports the TR-069/TR-111 standards, and can accept a configuration and a management of the ACS of the gateway. The gateway may also be a LAN device, which needs to associate with another LAN device and cooperate with the another LAN device in communication operation;
(2) The configuration management server of the gateway is used for automatically configuring and managing the gateway;
(3) The LAN device is provided within the LAN, supports the TR-111 standard, and can be configured and managed by a configuration management server of the device; in an embodiment, the LAN may include LAN devices; and
(4) The configuration management server of the LAN device is used for automatically configuring and managing the LAN device; in an embodiment, each LAN device may correspond to a different configuration management server.

In an embodiment of the present invention, these functions may be implemented on the basis of each of entity devices in the DSL system.

In summary, according to embodiments of the present invention, the device and the gateway are allowed to find that their configuration management servers are not the same, by using information about the configuration management server and the like which are included in the interactive message during the association of the device and the gateway; further, in the case that configuration management servers of the device and the gateway are not the same, the configuration management server of the device is allowed to not only automatically configure and manage the device, but also accordingly configure and manage the device and the services of the device on the gateway.

The above solutions are only preferred embodiments of the present invention, and are not intended to limit the scope of the present invention. Any modification, equivalent substitution and improvement within the scope of the disclosure will be apparent to those skilled in the art, and are intended to be included in the scope of the present invention. Thus, it is intended that the scope of the present invention be defined by the following claims and their equivalents.

## Claims

1. A method for implementing configuration management of devices in a network, **characterized by** comprising:
sending (77), by a second configuration management server corresponding to a second device, the request to an operator supported system OSS;
receiving (77), by a first configuration management server corresponding to a first device, a request for configuring the first device through the operator supported system, OSS, the first configuration management server corresponding to the first device being different from the second configuration management server corresponding to the second device;
configuring (711), by the first configuration management server corresponding to the first device, the first device according to the request;
before receiving the request by the first configuration management server, further comprising:
transmitting (71), by the second device, to the first device a message carrying information about the configuration management server corresponding to the second device; and
transmitting (73), by the first device, to the second device a message carrying information about the configuration management server corresponding to the first device.

2. The method according to claim 1, wherein the message carrying information about the configuration management server corresponding to the second device is a DHCP-based message.

3. The method according to claim 1, wherein the message carrying information about the configuration management server corresponding to the first device is a DHCP-based message.

4. The method according to claim 1, before sending the request to the OSS by the second configuration management server corresponding to the second device, further comprising:
transmitting (74), by the second device, a TR-069 Inform message to the configuration management server of the second device, wherein The TR-069 Inform message includes an identifier of the second device and the related information about the first device, the related information about the first device includes an identifier of the first device and a Connection Request URL, the TR-069 Inform message further includes information about the configuration management server of the first device, which includes a URL of the configuration management server of the first device.

## Patentansprüche

1. Verfahren zum Implementieren von Konfigurationsverwaltung von Einrichtungen in einem Netzwerk, **dadurch gekennzeichnet, dass** es die folgenden Schritte umfasst:
ein zweiter Konfigurationsverwaltungsserver, der einer zweiten Einrichtung entspricht, sendet (77) die Anforderung zu einem betreiberunterstützten System, OSS;
ein erster Konfigurationsverwaltungsserver, der einer ersten Einrichtung entspricht, empfängt (77) eine Anforderung zum Konfigurieren der ersten Einrichtung durch das betreiberunterstützte System, OSS, wobei der erste Konfigurationsverwaltungsserver, der der ersten Einrichtung entspricht, von dem zweiten Konfigurationsverwaltungsserver, der der zweiten Einrichtung entspricht, verschieden ist;
der erste Konfigurationsverwaltungsserver, der der ersten Einrichtung entspricht, konfiguriert (711) die erste Einrichtung gemäß der Anforderung;
weiterhin mit den folgenden Schritten vor dem Empfangen der Anforderung durch den ersten Konfigurationsverwaltungsserver:
die zweite Einrichtung überträgt (71) eine Nachricht zu der ersten Einrichtung, die Informationen über den Konfigurationsverwaltungsserver führt, der der zweiten Einrichtung entspricht; und
die erste Einrichtung überträgt (73) eine Nachricht zu der zweiten Einrichtung, die Informationen über den Konfigurationsverwaltungsserver führt, der der ersten Einrichtung entspricht.

2. Verfahren nach Anspruch 1, wobei die Nachricht, die Informationen über den Konfigurationsverwaltungsserver führt, der der zweiten Einrichtung entspricht, eine auf DHCP basierende Nachricht ist.

3. Verfahren nach Anspruch 1, wobei die Nachricht, die Informationen über den Konfigurationsverwaltungsserver führt, der der ersten Einrichtung entspricht, eine auf DHCP basierende Nachricht ist.

4. Verfahren nach Anspruch 1, das vor dem Senden der Anforderung zu dem OSS durch den zweiten Konfigurationsverwaltungsserver, der der zweiten Einrichtung entspricht, ferner Folgendes umfasst:
die zweite Einrichtung überträgt (74) eine TR-069-Inform-Nachricht zu dem Konfigurationsverwaltungsserver der zweiten Einrichtung, wobei die TR-069-Inform-Nachricht eine Kennung der zweiten Einrichtung und die betreffenden Informationen über die erste Einrichtung umfasst, die betreffenden Informationen über die erste Einrichtung eine Kennung der ersten Einrichtung und eine "Connection Request URL" umfassen und die TR-069-Inform-Nachricht ferner Informationen über den Konfigurationsverwaltungsserver der ersten Einrichtung umfasst, die einen URL des Konfigurationsverwaltungsservers der ersten Einrichtung umfassen.

## Revendications

1. Procédé pour mettre en oeuvre une gestion de configuration de dispositifs dans un réseau, **caractérisé en ce qu'**il comprend les étapes suivantes :
envoyer (77), par l'intermédiaire d'un second serveur de gestion de configuration correspondant à un second dispositif, la demande à un système exploité par opérateur OSS ;
recevoir (77), par l'intermédiaire d'un premier serveur de gestion de configuration correspondant à un premier dispositif, une demande pour configurer le premier dispositif par l'intermédiaire du système exploité par opérateur, OSS, le premier serveur de gestion de configuration correspondant au premier dispositif étant différent du second serveur de gestion de configuration correspondant au second dispositif ;
configurer (711), par l'intermédiaire du premier serveur de gestion de configuration correspondant au premier dispositif, le premier dispositif selon la demande ;
avant réception de la demande par le premier serveur de gestion de configuration, comprenant en outre les étapes suivantes :
transmettre (71), par l'intermédiaire du second dispositif, au premier dispositif un message acheminant des informations concernant le serveur de gestion de configuration correspondant au second dispositif ; et
transmettre (73), par l'intermédiaire du premier dispositif, au second dispositif un message acheminant des informations concernant le serveur de gestion de configuration correspondant au premier dispositif.

2. Procédé selon la revendication 1, dans lequel le message acheminant des informations concernant le serveur de gestion de configuration correspondant au second dispositif est un message DHCP.

3. Procédé selon la revendication 1, dans lequel le message acheminant des informations concernant le serveur de gestion de configuration correspondant au premier dispositif est un message DHCP.

4. Procédé selon la revendication 1, avant envoi de la demande à l'OSS par l'intermédiaire du second serveur de gestion de configuration correspondant au second dispositif, comprenant en outre l'étape suivante :
transmettre (74), par l'intermédiaire du second dispositif, un message d'information TR-069 au serveur de gestion de configuration du second dispositif, dans lequel le message d'information TR-069 comprend un identifiant du second dispositif et les informations relatives au premier dispositif, les informations relatives au premier dispositif comprennent un identifiant du premier dispositif et une URL de demande de connexion, le message d'information TR-069 comprend en outre des informations concernant le serveur de gestion de configuration du premier dispositif, qui comprend une URL du serveur de gestion de configuration du premier dispositif.
